# EUROPÄISCHE PATENTSCHRIFT

(11) **EP 3 823 430 B1**
(45) Veröffentlichungstag und Bekanntmachung des Hinweises auf die Patenterteilung: **10.09.2025**
(21) Anmeldenummer: 19745967.0
(22) Anmeldetag: 11.07.2019
(51) Int. Cl.: A01B 71/06, A01B 33/08

(54) **LANDWIRTSCHAFTLICHES GERÄT MIT GELENKWELLENANTRIEB**
AGRICULTURAL DEVICE HAVING AN ARTICULATED SHAFT DRIVE
APPAREIL AGRICOLE POURVU D'UNE TRANSMISSION À CARDAN

(30) Priorität: 19.07.2018 DE 102018117480
(43) Veröffentlichungstag der Anmeldung: 26.05.2021
(73) Patentinhaber: Lemken GmbH & Co KG, 46519 Alpen (DE)
(72) Erfinder: BERENDSEN, Mark, 7044 AJ Lengel (NL)
(86) Internationale Anmeldenummer: PCT/DE2019/100649
(87) Internationale Veröffentlichungsnummer: WO 2020/015784

(56) Entgegenhaltungen:
- DE-A1- 4 019 948
- US-A- 3 908 398
- US-A1- 2004 070 172

## Beschreibung

Die Erfindung betrifft ein angehängtes, landwirtschaftliches Gerät gemäß dem Oberbegriff des Patentanspruches 1.

Landwirtschaftliche Maschinen können über eine Zapfwelle eines Traktors für ihre Funktion mit Drehenergie versorgt werden. Vorzugsweise erfolgt die Übertragung der Drehenergie über eine teleskopische Gelenkwelle, welche an ihrem jeweiligen Ende mit einem Kreuzgelenk versehen ist. Fluchten Zapfwelle des Traktors und Eingangswelle des landwirtschaftlichen Gerätes zueinander, wird die Drehbewegung der Zapfwelle gleichmäßig übertragen. Es ist bekannt, dass bei einer Umdrehung der Gelenkwelle um 360° um ihre Mittelachse aufgrund der Kardananordnung mit zunehmender Abwinkelung der jeweiligen Kreuzgelenke Ungleichförmlichkeiten und somit die Schwingungen im Antriebsstrang auftreten, welche zum vorzeitigen Verschleiß oder Zerstörung von Antriebskomponenten führen können. Die Ungleichförmigkeit stellt sich in unterschiedlichen Winkelgeschwindigkeiten an An- und Abtrieb des Kreuzgelenkes dar, welche in Art einer Sinusschwingung verläuft und in Folge ein pulsierendes Drehmoment erzeugt. Kombiniert man, wie an einer Gelenkwelle üblich, zwei Kreuzgelenke miteinander und richtet die jeweils inneren Kreuzgelenkgabeln zueinander aus, heben sich bei gleicher Abwinkelung beider Kreuzgelenke die ungleichförmigen Drehschwingungen gegenseitig auf. Dann entsteht ein Gleichlauf der Gelenkwelle zwischen An- und Abtrieb. Sind beide Kreuzgelenke in dieselbe Richtung abgewinkelt, spricht man von einer W-Beugen-Anordnung einer Gelenkwelle. Sind beide Kreuzgelenke in die entgegengesetzte Richtung abgewinkelt, so dass die angrenzenden An- und Abtriebswellen zueinander parallel liegen, spricht man von einer Z-Beuge. Die Rotationsbewegung bzw. die Winkelgeschwindigkeit am Eingang und Ausgang der Gelenkwelle verlaufen dann gleichförmig.

Treffen sich somit die gedachten Verlängerungen der Mittelachsen von Zapfwelle des Traktors und Eingangswelle des landwirtschaftlichen Gerätes, welche in einem Winkel zueinanderstehen, etwa auf Höhe des Gelenkwellenmittelpunktes, so heben sich die Ungleichförmigkeiten über eine Umdrehung der Gelenkwelle gegenseitig auf. Diese spezielle Kreuzgelenk- oder Gelenkwellenanordnung, bei der die Kreuzgelenke der Gelenkwelle in gleicher Richtung gleich abgewinkelt sind, wird als **W-Beuge** bezeichnet. Sind die Mittelachsen von Zapfwelle des Traktors und Eingangswelle des landwirtschaftlichen Gerätes zueinander versetzt, jedoch parallel angeordnet, sind die Kreuzgelenke der dazwischenliegenden Gelenkwelle ebenfalls gleich, jedoch in entgegengesetzter Richtung abgewinkelt. Auch hier heben sich die Ungleichförmigkeit der jeweiligen Kreuzgelenke bei einer Umdrehung der Gelenkwelle gegenseitig auf. Dieser spezielle Fall einer Kreuzgelenk- oder Gelenkwellenanordnung wird als **Z-Beuge** bezeichnet.

Grundsätzlich sind in der Landtechnik Weitwinkelgelenkwellen bekannt, bei welchen eines oder beide Kreuzgelenke der Gelenkwelle durch ein Weitwinkelgelenk ersetzt werden. Diese Weitwinkelgelenkwelle bestehen aus einem Doppelkreuzgelenk, welche Abwinkelungen bis zu 80° ermöglichen, im Dauerbetrieb bei starken Abwinkelungen, wie sie bei starker Kurvenfahrt auftreten, jedoch einen starken Bauteilverschleiß unterliegen.

Die europäische Patentschrift EP 2 172 092 B1 zeigt ein mit einer Verbindungseinrichtung an einen Traktor angehängtes, über eine Zapfwelle des Traktors angetriebenes Bodenbearbeitungsgerät. Dieses Bodenbearbeitungsgerät wird über einen Gelenkwellenstrang von der Zapfwelle des Traktors mit Drehenergie versorgt. Dabei ist der Gelenkwellenstrang, welcher aus zwei einzelnen Gelenkwellen gebildet wird, etwa auf der Hälfte seiner Ausdehnung durch ein bewegliches Zwischenlager mit einer drehbaren Zwischenwelle unterteilt. Dies bewegliche Zwischenlager ist etwa auf Höhe einer vertikalen Schwenkachse der Verbindungseinrichtung zwischen Gerät und Traktor angeordnet, um welche das Gerät bei Kurvenfahrt des Traktors schwenkt und die Verbindungeinrichtung seitlich abgewinkelt wird. Die vertikale Schwenkachse der Verbindungseinrichtung ist etwa auf der Hälfte des Abstandes zwischen Zapfwelle des Traktors und Eingangsantriebswelle des Bodenbearbeitungsgerätes angeordnet. Dabei ist das bewegliche Zwischenlager derart auf dem vorderen und hinteren Teil der Verbindungseinrichtung angeordnet, dass die zum Zwischenlager benachbarten Kreuzgelenke der Gelenkwellen des Gelenkwellenstranges nur etwa um die Hälfte des Schwenkwinkels der Verbindungseinrichtung abgewinkelt werden und einen annähernden Gleichlauf ohne nennenswerte Drehschwingungen des gesamten Gelenkwellenstranges zwischen Traktor und Gerät auch bei extremer Kurvenfahrt ermöglichen. Die Haltbarkeit des Gelenkwellenstranges wird so erhöht. Sind die baulichen Voraussetzungen nicht gegeben, die Zwischenwelle in gleichem, etwa halben Winkel zwischen der Zapfwelle des Traktors und der Eingangswelle des Bodenbearbeitungsgerätes anzuordnen, entstehen unterschiedliche Beugewinkel im Gelenkwellenstrang, welche zu einer Ungleichförmigkeit und somit erhöhten Drehschwingungen des Gelenkwellenstranges führen. Aus der US 2004/070172 A1 oder US 3 908 398 A sind weitere Bodenbearbeitungsgeräte bekannt, welche an einen Traktor angehängt sind und durch eine Zapfwelle des Traktors über einen Gelenkwellenstrang mit Drehenergie versorgt werden.

Die US 2004/070172 A1 beschreibt eine zweite Gelenkwelle in einer festen Z-Beugen-Stellung, d.h. die Lagereinheit eine Zwischenwelle aufweist und derart beweglich auf oder an der Verbindungseinrichtung angeordnet ist, dass die Zwischenwelle in abgewinkelter Stellung des Traktors zum Gerät die erste Gelenkwelle in eine W-Beugen-Stellung verbringt, aber die zweite Gelenkwelle in eine Z-Beugen-Stellung nicht verbringen kann.

Aufgabe der Erfindung ist es, eine Antriebsanordnung für ein angetriebenes landwirtschaftliches Gerät bereitzustellen, welche auch bei beliebigen Abständen des Knick -oder Schwenkpunktes der Verbindungseinrichtung zwischen Traktor und Gerät einen annähernd gleichförmigen Antrieb des Gerätes durch die Zapfwelle des Traktors ermöglicht.

Diese Aufgabe wird durch die Merkmale des kennzeichnenden Teiles des Anspruches 1 gelöst.

Durch die Unterteilung der Gelenkwellenanordnung zwischen Traktor und landwirtschaftlichem Gerät in eine erste und eine zweite Gelenkwelle können diese derart angeordnet werden, dass bei der Schwenkbewegung der Verbindungseinrichtung zwischen Traktor und landwirtschaftlichem Gerät die erste Gelenkwelle eine W-Beuge und die zweite Gelenkwelle eine Z-Beuge bilden. Innerhalb der jeweiligen Gelenkwellen heben sich die Ungleichförmigkeiten auf. Vorteilhafterweise und unerwartet bedarf es bei dieser Anordnung keiner symmetrischen Längenaufteilung zwischen erster und zweiter Gelenkwelle im Antriebsstrang, da die jeweiligen Gelenkwellen bereits selbst im Gleichlauf laufen.

Somit kann der Schwenkpunkt der Verbindungseinrichtung zwischen Traktor und landwirtschaftlichem Gerät nahezu beliebig festgelegt werden.

Erfindungsgemäß ordnet man auf oder an der Verbindungseinrichtung eine Lagereinheit mit einer Zwischenwelle derart beweglich an, dass die Zwischenwelle in abgewinkelter Stellung des Traktors zum Gerät die erste Gelenkwelle in eine W-Beugen-Stellung und die zweite Gelenkwelle in eine Z-Beugen-Stellung verbringt.

Idealerweise bewegt sich die Lagereinheit, welche an oder auf der Verbindungseinrichtung angeordnet ist, von Gerät in Richtung Antriebseinheit gesehen, seitlich zur Verbindungseinrichtung. Dabei schwingt die Lagereinheit, in Draufsicht von oben auf Antriebseinheit und Gerät gesehen, umso weiter seitlich von der Verbindungseinrichtung weg, wie Antriebseinheit und Gerät abgewinkelt zueinander stehen

Besonders günstig ist eine zumindest weitgehend parallele Bewegung der Lagereinheit bzw. einer darin gelagerten Zwischenwelle relativ zur Ausrichtung der Verbindungseinrichtung zwischen Gerät und Antriebseinheit. Durch die parallele Bewegung kann der Eingangs- und Ausgangswinkel der Gelenkwelle, welche eine W-Beuge bildet, bzw. deren Kreuzgelenkabwinkelung nahezu symmetrisch ausgerichtet werden. Gleichteilig wird durch die parallele Bewegung der Lagereinheit zwangsläufig die Z-Beuge, welche die andere Gelenkwelle des Gelenkwellenstranges bildet, beibehalten.

Vorzugsweise folgt die Bewegung der Lagereinheit in die entgegengesetzte Schwenkrichtung des Gerätes zur Antriebsreiheneinheit. Dies bedeutet: bewegt sich die Antriebseinheit relativ zum Gerät nach links, verlagert sich die Lagereinheit nach rechts. Bewegt sich die Antriebseinheit nach rechts, verlagert sich die Lagereinheit entsprechend nach links. Dabei wird der mögliche lenk- oder Einschlagwinkel zwischen Antriebseinheit und Gerät maximiert, da die Antriebseinheit bzw. ihre Außenkontur bis an die Verbindungseinrichtung schwenken kann, da die Zwischenwelle bzw. die Lagereinheit in entgegengesetzer Richtung von der Verbindungseinrichtung wegschwenkt.

Weiterhin ist ein Stellglied vorgesehen, welches mit der Lagereinheit in Verbindung steht und die Bewegung der Lagereinheit relativ zur Verbindungseinrichtung steuert. Hierdurch kann ein Zwanglauf zur Bewegung der Lagereinheit hergestellt werden.

Dabei kann der Zwanglauf zur Bewegung der Lagereinheit in Abhängigkeit des Schwenkwinkels zwischen Gerät und Antriebseinheit gesteuert werden. Durch eine geschickte Anordnung des Stellgliedes verläuft die Bewegung der Lagereinheit nahezu synchron zur Schwenkbewegung des Gerätes zur Antriebseinheit, wie sie beispielsweise bei unterschiedlich starker Kurvenfahrt auftritt.

Vorteilhafterweise ist das Stellglied zugleich mit einem Betätigungsmechanismus für lenkbare Achsen des landwirtschaftlichen Gerätes verbunden. Somit kann gleichzeitig die Position der Lagereinheit relativ zur Verbindungseinrichtung als auch der Lenkwinkel der Lenkachsen des Gerätes zur Erzielung eines spurtreuen Nachlaufes des Gerätes hinter der Antriebseinheit erreicht werden. Ein spurtreuer Nachlauf, mithin auch als Zwangslenkung bekannt, vermeidet Boden- und Kulturschäden sowie eine Überbeanspruchung der beteiligten Fahrwerkskomponenten des Gerätes, wie sie bei üblicher Feld- und Straßenfahrt, insbesondere bei hohen Achslasten auftreten.

Insbesondere weist das Stellglied weiterhin eine zusätzliche Verbindung zur Antriebseinheit und/oder zum landwirtschaftlichen Gerät auf. Dies kann als mechanische Strebe, Schub- oder Zugstange oder in Form einer hydraulischen Geber-Nehmer Zylinderkombination ausgebildet sein. Hierdurch entsteht ein Zwanglauf-Mechanismus, welcher ohne weiteren Eingriff eines Fahrers eine optimale Anordnung der Lagereinheit relativ zur Verbindungseinrichtung gewährleistet, um eine möglichst gleichförmige Bewegung des Antriebsstranges zu erhalten.

In einer speziellen Erfindungsform ist das Stellglied als Stellmotor ausgebildet. Dies kann ein hydraulischer oder elektrischer Aktor sein, welcher mit einer hydraulischen oder elektronischen Messeinrichtung und/oder einer Steuer- und Regeleinheit in Verbindung steht, welche Geometrieparameter wie die Winkelstellung oder Abstände zwischen Antriebseinheit, Verbindungseinrichtung, Gelenkwellenanordnung, Lagereinheit und/oder landwirtschaftlichem Gerät ermittelt und den Stellmotor entsprechend ansteuert, insbesondere bei Kurvenfahrt. Über die Messeinrichtung kann eine progressive, degressive oder proportionale Ansteuerung des Stellmotors in Abhängigkeit ermittelter Geometrieparameter erfolgen.

Weiterhin kann das Stellglied als Stellmotor durch eine Steuer- und Regeleinheit in Verbindung mit einer Messeinrichtung zur Erfassung einer oder mehrerer Ungleichförmigkeitsparameter im Antriebsstrang in Abhängigkeit der gemessenen Parameter angesteuert werden. Die Ungleichförmigkeit, mit welcher sich die Wellen und Gelenke des Antriebsstranges rotatorisch bewegen, kann durch Messung eines oder mehrerer Parameter wie einwirkendes Drehmoment, Drehwinkel oder der Winkelgeschwindigkeit einer oder mehrerer Komponenten des Antriebsstranges ermittelt werden. Als Antriebsstrang gilt die gesamte Wirkverbindung zwischen Zapfwelle der Antriebseinheit und einem oder mehreren angetriebenen Arbeitswerkzeugen oder Hilfseinrichtungen des landwirtschaftlichen Gerätes. Insbesondere weisen zyklisch schwankende Messwerte auf eine Ungleichförmigkeit hin. Anhand dieser kann der Stellmotor derart geregelt werden, dass die Schwankung der Messwerte abnimmt. Vorzugsweise sind die Messeinrichtungen im Bereich der Lagereinheit angeordnet oder in diese integriert.

Die Erfindung zeichnet sich insbesondere dadurch aus, dass durch Unterteilung eines Gelenkwellenantriebsstranges zwischen Antriebseinheit und landwirtschaftlichem Gerät in zumindest eine erste und eine zweite Gelenkwellenanordnung, welche im abgewinkelten Zustand jeweils annähernd eine Z-Beuge bzw. eine W-Beuge bilden, welche jeder für sich und somit auch insgesamt Gleichlaufeigenschaften aufweisen und einen gleichförmigen, mechanischen Antrieb des landwirtschaftlichen Gerätes durch die Antriebseinheit ermöglichen. Diese auf den ersten Blick ungewöhnliche und unübliche Anordnung ermöglicht eine extrem robuste Antriebsstrangkonstruktion, welche eine extreme Drehmoment- und Leistungsübertragung sowie eine maximale Schonung aller beteiligten Antriebsstrangkomponenten durch den optimierten Gleichlauf des Gelenkwellenstranges bewirkt.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Fig.1:: eine perspektivische Darstellung eines Traktors mit einem angehängten landwirtschaftlichen Gerät.
- Fig.2:: eine Darstellung eines Traktors mit angehängtem landwirtschaftlichen Gerät in Draufsicht
- Fig. 3:: eine Darstellung eines Traktors mit angehängtem nachbarschaftlichen Gerät in Seitenansicht und
- Fig. 4: eine vergrößerte Ansicht analog zu Figur 2

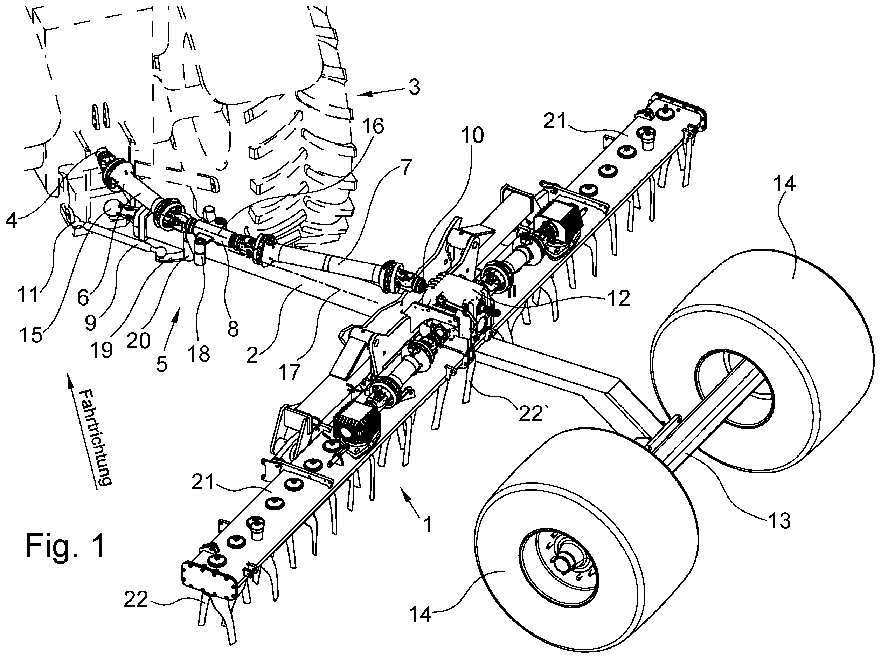

Figur 1 zeigt ein landwirtschaftliches Gerät 1, hier eine klappbare Kreiselegge mit rotierenden Bodenbearbeitungswerkzeugen, welche über eine als Zugdeichsel ausgebildete Verbindungseinrichtung 2 und einem Kupplungskopf 15 mit einer Antriebseinheit 3, beispielsweise einem Traktor, seitlich schwenkbar verbunden ist. Dabei kann der Kupplungskopf 15 beispielsweise als Zugöse oder Kugelkopf passend zur Anhängekupplung der Antriebseinheit ausgebildet sein und eine lösbare Verbindung darstellen. Eine Anhängekupplung der Antriebseinheit kann beispielsweise eine Bolzenkupplung, ein Zughaken, ein Kugelkopf, eine Ackerschiene oder ein Dreipunktanbauturm sein. Der Kupplungskopf 15 ermöglicht über die seitliche Verschwenkung des Gerätes 1 zur Antriebseinheit 3, die üblicherweise bei Kurvenfahrt und Lenkbewegungen auftritt, zusätzliche Freiheitsgrade, um Bodenunebenheiten, Aushubbewegung des Gerätes 1 etc. auszugleichen. Das Gerät 1 stützt sich mit einem starren oder aushebbaren Fahrwerk 13 mit daran befestigten Laufrädern 14, hier angedeutet, auf den Boden ab. Ändert die Antriebseinheit 3, hier der Traktor, seine Fahrtrichtung oder fährt eine Kurvenbahn ab, läuft das Gerät entsprechend des Abstandes zwischen Antriebseinheit 3 und Fahrwerk 13 der Antriebseinheit nach. Dabei ändert sich die Anwinkelung zwischen Antriebseinheit 3 und Verbindungseinrichtung 2 bzw. Gerät 1, wie dargestellt. Das Gerät ist mit einem Getriebe 12 versehen, in welchen die Antriebsleistung der Antriebseinheit 3 auf die Arbeitswerkzeuge des Gerätes 1 übertragen werden. Im Falle einer bevorzugten Kreiselegge wird die Antriebsleistung von dem Getriebe 12 über einen Räderkasten 21 auf mehrere, rotierende Kreiselzinken 22 übertragen, welche mit dem Boden in Eingriff stehen und diesen mischen bzw. zerkleinern.

Die Eingangswelle 10 des Getriebes 12 steht mit der Zapfwelle 4 der Antriebseinheit über eine Gelenkwellenanordnung 5, bestehend aus einer ersten Gelenkwelle 6, einer zweiten Gelenkwelle 7 sowie einer zwischen den beiden Gelenkwellen angeordneten Lagereinheit 8 und darin gelagerter Zwischenwelle 16 in Verbindung. Die Zapfwelle 4 ist in der Regel in Längsrichtung bzw. Fahrtrichtung der Antriebseinheit 3 ausgerichtet und dient zur mechanisch-rotatorischen Übertragung der Motorleistung der Antriebseinheit 3 in das angehängte oder angebaute Gerät 1. Die erste Gelenkwelle 6 ist an ihrem einen Ende über ein Kreuzgelenk lösbar mit der Zapfwelle 4 der Antriebseinheit und an ihrem anderen Ende ebenfalls mit einem Kreuzgelenk mit einer Zwischenwelle 16, welche sich drehbar gelagert durch die Lagereinheit 8 erstreckt, kardanisch verbunden. Am jeweiligen Ende der Lagereinheit 8, welche vorzugsweise als Rohr oder Hohlkörper ausgebildet ist, ist ein Kugel-, Rollen- oder Gleitlager angeordnet, welches die Zwischenwelle 16 translatorisch zu Lagereinheit fixiert. Über die Lagereinheit 8 hinaus endet die Zwischenwelle jeweils in einen Wellenstummel, welcher über eine Passfeder-, Profil- oder Stiftpaarung torsionsfest und vorzugsweise axial unverschiebbar mit den Kreuzgelenken der jeweils daran anschließenden Gelenkwellen 6, 7 verbunden ist. Die Zwischenwelle 16 ist durch Lagereinheit 8 und Kreuzgelenke verdeckt, jedoch über ihre Rotationsmittelachse angedeutet. Zwischen Lagereinheit 8 und Getriebe 12 ist eine weitere Gelenkwelle 7 angeordnet, welcher auf der einen Seite mit einem Kreuzgelenk an der Zwischenwelle 16 der Lagereinheit und auf der anderen Seite mit einem Kreuzgelenk an der Eingangswelle des Getriebes kardanisch verbunden ist. Die Gelenkwellen sind mit Teleskopprofilen ausgestattet, welche die jeweiligen Kreuzgelenke der Gelenkwelle 6,7 längenveränderlich miteinander verbinden. Die Lagereinheit 8 ist seitlich verschiebbar zur Verbindungseinrichtung 2 auf dieser mit einem weiteren Mechanismus 20 gelagert. Dieser Mechanismus 20 kann, wie dargestellt, durch eine Parallelogrammgelenkanordnung erfolgen. Ebenso ist eine Schiebekulisse oder ein einfacher Schwenkhebel denkbar. Im Falle eines einfachen Schwenkhebels ist dessen Schwenkachse etwa parallel zur Haupterstreckungsrichtung 17 der Verbindungseinrichtung 2 ausgerichtet. Hierdurch erfolgt eine seitliche Verschwenkung der Lagereinheit 8 in einer gedachten Schwenkebene, welche senkrecht zur Verbindungseinrichtung 2 bzw. seiner Haupterstreckungsrichtung 17 steht, beispielsweise in Form eines Bogensegmentes. Entscheidend ist die seitliche Bewegung der Lagereinheit 8 bzw. seiner Verbindungswelle 16 zur Haupterstreckungsrichtung 17 der Verbindungseinrichtung 2, wobei die Haupterstreckungsrichtung 17 bei Geradeausfahrt von Antriebseinheit 3 und Gerät 1 (hier nicht dargestellt) in der Regel der Fahrtrichtung entspricht.

Der Mechanismus 20 zur seitlichen Bewegung der Lagereinheit 8 relativ besteht aus 2 Schwenkhebeln 18. Die Schwenkhebel 18 sind einerseits jeweils schwenkbar zur Verbindungseinrichtung 2 und mit zwei parallelen Schwenkachsen und der Lagereinheit 8 vorzugsweise parallelogrammartig gelagert. Über einen seitlich von einem Schwenkhebel 18 abstehenden Betätigungsarm 19 ist ein Stellglied 9 gelenkig mit einem weiteren Befestigungspunkt 11 an der Antriebseinheit verbunden. Ändert die Antriebseinheit 3 seine Lage zum Gerät 1 bzw. zur Verbindungseinrichtung 2, ändert sich die Position von Befestigungspunkt 11 zum Kupplungskopf 15. Infolgedessen wird über das Stellglied 9 die Lageänderung des Punktes 11 auf den Betätigungsarm 19 und den Schwenkhebel 18 und somit auf den Mechanismus 20 zur seitlichen Bewegung der Lagereinheit 8 übertragen, welcher daraufhin mitsamt seiner Zwischenwelle 16 seine Lage relativ zur Verbindungseinrichtung 2 verändert.

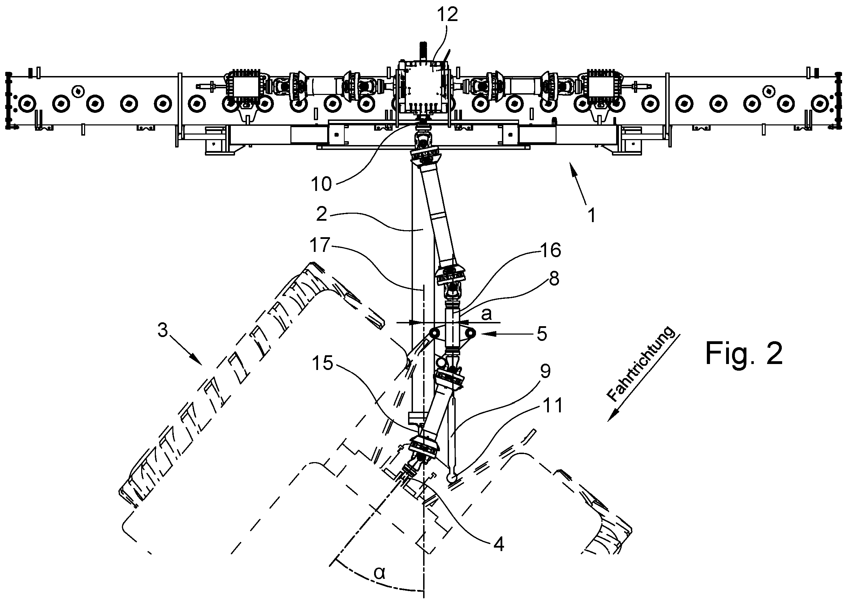

Figur 2 zeigt die Anordnung mit ihren wesentlichen Komponenten aus Figur 1 in Draufsicht.

Das Gerät 1 ist über die Verbindungseinrichtung 2 sowie über den durch die Gelenkwelle 6 verdeckten Kupplungskopf 15 der Antriebseinheit 3 seitlich schwenkbar verbunden. Der Schwenkwinkel des Gerätes bzw. seiner Verbindungseinrichtung zu Antriebseinheit 3 wird anhand der Mittelebenen, welche durch die Haupterstreckungsrichtung 17 der Verbindungseinrichtung 2 und der Zapfwelle 4 der Antriebseinheit 3 verlaufen, durch den Winkel α dargestellt. Wie bereits zuvor beschrieben, hat durch die Anwinkelung α der Befestigungspunkt 11 seine Position relativ zur Verbindungseinrichtung 2 bzw. zum Kupplungskopf 15 geändert. Entsprechend überträgt das Stellglied 9 diese Bewegung auf den Verstellmechanismus der Lagereinheit 8. Hierdurch bewegt sich die Lagereinheit 8 seitlich von der Verbindungseinrichtung 2 weg, und zwar jeweils entgegengesetzt zur Schwenkrichtung der Antriebseinheit 3. Die Ausrichtung der Zwischenwelle 16 und der Haupterstreckungsrichtung 17 sind dabei stets parallel oder zumindest annähernd parallel zueinander ausgerichtet. Der seitliche Versatz der Lagereinheit 8 bzw. Zwischenwelle 16 zur Verbindungseinrichtung 2 bzw. Haupterstreckungsrichtung 17 wird durch den Abstand a dargestellt. Lenkt bzw. schwenkt die Antriebseinheit 3 in seiner Fahrtrichtung, wie dargestellt, nach rechts, vergrößert sich mit zunehmenden Schwenkwinkel α der Abstand a der Lagereinheit 8 von der Verbindungseinrichtung 2 nach links. Schwenkt oder lenkt die Antriebseinheit 3 entgegengesetzt nach links, verlagert sich die Lagereinheit 8 entsprechend nach rechts von der Verbindungseinrichtung 2. Bei Geradeausfahrt der Antriebseinheit 3 verringert sich der Schwenkwinkel α gegen 0°. Entsprechend bewegt sich die Lagereinheit 8 bzw. Zwischenwelle 16 zur Mitte der Verbindungseinrichtung 2. Der seitliche Abstand a der Lagereinheit 8 zur Verbindungseinrichtung 2 läuft somit ebenfalls, aber mit entgegengesetzter Richtung gegen 0.

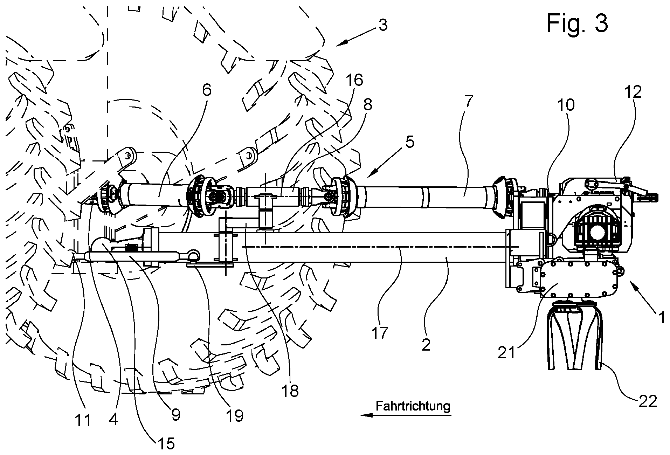

Figur 3 zeigt die Anordnung vom Gerät und Antriebseinheit 3 sowie deren wesentlichen Komponenten im eingeschwenkten Zustand der Antriebseinheit 3 in Seitenansicht.

Erkennbar ist die Verbindungseinrichtung 2, welche mit dem Kupplungskopf 15 das Gerät 1 an der Antriebseinheit 3 um eine gedachte vertikaler Achse seitlich in Fahrtrichtung schwenkbar und gelenkig verbindet. Das Stellglied 9 ist zwischen Befestigung 11 sowie am äußeren Ende von Betätigungsarm 19 gelenkig angeordnet. Erkennbar ist die vertikal und parallel angeordnete Schwenklagerung der Schwenkhebel 18 relativ zur Verbindungseinrichtung 2 bzw. Lagereinheit 8. Das Kreuzgelenk der ersten Gelenkwelle 6, welches mit der Zapfwelle 4 der Antriebseinheit 3 verbunden ist, befindet sich etwa auf Höhe des Kupplungskopfes 15 bzw. seiner gedachten vertikalen Achse. Eine derartige Anordnung ist typischerweise bei einer Antriebseinheit 3, hier dargestellt ein Traktor mit Kugelkopf oder Bolzenkupplung, anzutreffen. Das andere Kreuzgelenk der Gelenkwelle 6 ist kardanisch mit der Zwischenwelle 16 der Lagereinheit 8 verbunden. Das andere Ende der Zwischenwelle 16 ist mit einem weiteren Kreuzgelenk kardanisch mit der zweiten Gelenkwelle 7 verbunden, welche wiederum mit einem weiteren Kreuzgelenk mit der Eingangswelle 10 des Getriebes 12 verbunden ist. Unterhalb des Getriebes 12 ist für die bevorzugte Form einer Kreiselegge als Gerät 1 ein Räderkasten 21 erkennbar, an welchem rotierende Kreiselzinken 22 befestigt sind, welche über den Räderkasten 21 mit dem Getriebe 12 in Verbindung stehen. Anstelle eines Getriebes sind jedwede weiteren Vorgelegearten oder Direktantriebe für ein Arbeitswerkzeug oder andere Einrichtungen des Gerätes denkbar.

Im Idealfall verlaufen Zapfwelle 4, Gelenkwelle 6, Zwischenwelle 16, Gelenkwelle 7 und Eingangswelle 10 etwa annähernd durch eine gedachte horizontale Ebene, welche parallel zur Verbindungseinrichtung bzw. deren Haupterstreckungsrichtung 17 verläuft. Somit können die Beugewinkelabhängigkeiten der Gelenkwellen in Draufsicht (vergleiche Figur 2) auf eine reine 2-dimensionale Aufgabenstellung reduziert werden. Ebenso sind aber unterschiedliche Höhenunterschiede von Zapfwelle 4 und Eingangswelle 10 des Getriebes 12 möglich. Entscheidend ist dabei jedoch, dass auch in Seitenansicht die jeweiligen Gelenkwellen in einer W-oder einer Z-Beuge abgewinkelt werden. Wenngleich dies räumlich eine zusätzliche Kreuzgelenkanwinkelung nach sich zieht, wird dennoch ein anspruchsgemäß gewünschter Gleichlauf der Gelenkwellenanordnung erhalten, sofern die anspruchsgemäßen Bedingungen zumindest in der Draufsicht, wie in Figur 2 beschrieben, eingehalten werden.

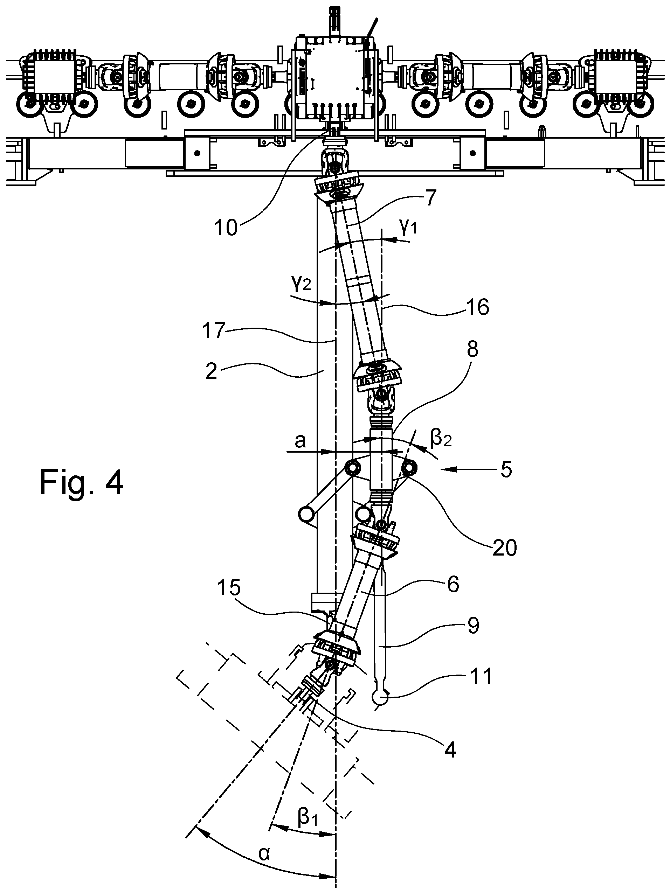

Figur 4 zeigt eine vergrößerte Darstellung der Gelenkwellenanordnung 5 aus Figur 2 mit den jeweiligen Beugewinkelabhängigkeiten. Die Gelenkwelle 6 stellt eine W-Beuge-Anordnung und die Gelenkwelle 7 eine Z-Beuge-Anordnung dar. Entscheidend für den Gleichlauf einer Gelenkwelle, egal ob W-oder Z-Beuge, ist ein möglichst gleicher Eingangs- und Ausgangswinkel der Kreuzgelenke relativ zur Längsachse der Gelenkwelle. Da durch die seitliche Verlagerung der Lagereinheit 8 eine achsparallele Verlagerung von Zwischenwelle 16 zur Eingangswelle 10 erreicht wird entsteht für die 2. Gelenkwelle 7 immer eine Z- Beuge, bei welcher sich der Eingangswinkel γ1 zwischen Gelenkwelle 7 und Zwischenwelle 16 sowie der Ausgangswinkel γ2 zwischen der Gelenkwelle 7 und der Eingangswelle 10 mit zunehmend seitlicher Ausladung der Zwischenwelle 16 bzw. Lagereinheit 8 relativ zur Verbindungseinrichtung 2, hier als Abstand a bezeichnet, kontinuierlich vergrößern. Somit ist der Gleichlauf der Gelenkwelle 7 durch Z-Beugen Anordnung stets gewährleistet.

Durch diese Abhängigkeit kann der seitliche Abstand a stets so justiert werden, dass der Ausgangswinkel β2 zwischen Gelenkwelle 6 und Zwischenwelle 16 etwa gleich groß und in gleicher Richtung wie der Eingangswinkel β1 zwischen Zapfwelle 4 und Gelenkwelle 6 abgewinkelt ist. Hierdurch gelangt die Gelenkwelle 6 in eine W-Beuge-Anordnung mit gleichen Eingangswinkel β1 und Ausgangswinkel β2. Somit wird durch die Inkaufnahme einer an sich unüblichen, aber gewollt einstellbaren Z-Beuge-Kinematik einer zweiten Gelenkwelle 7 eine optimierte W-Beuge-Kinematik der ersten Gelenkwelle 6 erreicht, obwohl durch die asymmetrische Anordnung des Kupplungskopfes relativ zur Erstreckung der Gelenkwelle 6 eine ungleichförmige Bewegung der ersten Gelenkwelle zu erwarten wäre.

### BEZUGSZEICHENLISTE

| | |
|---|---|
| 1 | Landwirtschaftliches Gerät |
| 2 | Verbindungseinrichtung |
| 3 | Antriebseinheit |
| 4 | Zapfwelle |
| 5 | Gelenkwellenanordnung |
| 6 | Erste Gelenkwelle |
| 7 | Zweite Gelenkwelle |
| 8 | Lagereinheit |
| 9 | Stellglied |
| 10 | Eingangswelle |
| 11 | Befestigungsmittel |
| 12 | Getriebe |
| 13 | Fahrwerk |
| 14 | Laufrad |
| 15 | Kupplungskopf |
| 16 | Zwischenwelle, Rotationsmittelachse |
| 17 | Haupterstreckungsrichtung |
| 18 | Schwenkhebel |
| 19 | Betätigungsarm |
| 20 | Mechanismus. |
| 21 | Räderkasten |
| 22 | Kreiselzinken |
| | |

## Patentansprüche

1. Zapfwellenbetriebenes, landwirtschaftliches Gerät (1), vorzugsweise zapfwellenbetriebenes Bodenbearbeitungsgerät, mit einer Verbindungseinrichtung (2), vorzugsweise einer Zugdeichsel, zur schwenkbaren Verbindung des Gerätes (1) mit einer Antriebseinheit (3) wie beispielsweise einem Traktor, wobei das Gerät (1) über eine Zapfwelle (4) der Antriebseinheit (3) mit Drehenergie versorgt wird,
wobei die Übertragung der Drehenergie zwischen Gerät (1) und Zapfwelle (4) über eine Gelenkwellenanordnung (5) erfolgt, welche der Verbindungseinrichtung (2) zugeordnet ist, wobei die Gelenkwellenanordnung (5) aus zumindest einer ersten (6) und einer zweiten Gelenkwelle (7) besteht, wobei zwischen der ersten (6) und der zweiten Gelenkwelle (7) eine Lagereinheit (8) angeordnet ist, welche beweglich auf oder an der Verbindungseinrichtung (2) angeordnet ist, wobei die Lagereinheit eine Zwischenwelle aufweist und derart beweglich auf oder an der Verbindungseinrichtung angeordnet ist, dass die Zwischenwelle in abgewinkelter Stellung des Traktors zum Gerät die erste Gelenkwelle in eine W-Beugen-Stellung und die zweite Gelenkwelle in eine Z-Beugen-Stellung verbringt.

2. Landwirtschaftliches Gerät nach Anspruch 1, **dadurch gekennzeichnet, dass** die Lagereinheit (8), von Gerät (1) Richtung Antriebseinheit (3) gesehen, mit zunehmender Verschwenkung (α) des Gerätes (1) bzw. der Verbindungseinrichtung (2) zur Antriebseinheit (3) seitlich zur Verbindungseinrichtung (2) beweglich angeordnet ist.

3. Landwirtschaftliches Gerät nach Anspruch 1 oder 2, **dadurch**
**gekennzeichnet, dass** eine Bewegung der Lagereinheit (8) weitgehend parallel zur Ausrichtung der Verbindungseinrichtung (2) zwischen Gerät (1) und Antriebseinheit (3) erfolgt.

4. Landwirtschaftliches Gerät nach einem der vorstehenden Ansprüche, **dadurch gekennzeichnet, dass** eine Bewegung der Lagereinheit (8) relativ zur Verbindungseinrichtung (2) entgegengesetzt zur Schwenkrichtung des Gerätes (1) zur Antriebseinheit (3) erfolgt.

5. Landwirtschaftliches Gerät nach einem der vorstehenden Ansprüche,
**dadurch gekennzeichnet, dass** ein Stellglied (9) vorgesehen ist, welches mit der Lagereinheit (8) in Verbindung steht und eine Bewegung der Lagereinheit (8) relativ zur Verbindungseinrichtung (2) steuert.

6. Landwirtschaftliches Gerät nach Anspruch 5, **dadurch gekennzeichnet, dass** das Stellglied (9) eine Bewegung der Lagereinheit (8) relativ zur Verbindungseinrichtung (2) in Abhängigkeit des Schwenkwinkels (α) zwischen Gerät und Antriebseinheit (3) steuert.

7. Landwirtschaftliches Gerät nach Anspruch 5 oder 6, **dadurch**
**gekennzeichnet, dass** das Stellglied (9) weiterhin mit einer Lenkvorrichtung in Verbindung steht, welche eine oder mehrere lenkbare Achsen eines Fahrwerkes des landwirtschaftlichen Gerätes (1) betätigt.

8. Landwirtschaftliches Gerät nach einem der Ansprüche 5 bis 7, **dadurch gekennzeichnet, dass** das Stellglied (9) weiterhin eine zusätzliche Verbindung (11) zur Antriebseinheit (3) und/oder zum landwirtschaftlichen Gerät (1) aufweist.

9. Landwirtschaftliches Gerät nach einem der Ansprüche 5 bis 8, **dadurch gekennzeichnet, dass** das Stellglied (9) als Stellmotor ausgebildet ist und dass eine Steuer- und Regeleinheit mit einer Messeinrichtung zur Erfassung von geometrischen Lageparametern der Verbindungseinrichtung und/oder der daran angeordneten Gelenkwellenanordnung (5) bzw. deren Antriebsstrangkomponenten (4, 6, 7, 8, 10, 12,16, 21) vorgesehen ist, wobei das Stellglied (9) in Abhängigkeit eines oder mehrerer der erfassten Lageparameter durch die Steuer- und Regeleinheit ansteuerbar ist.

10. Landwirtschaftliches Gerät nach einem der Ansprüche 5 bis 9, **dadurch gekennzeichnet, dass** das Stellglied (9) als Stellmotor ausgebildet ist und dass eine Steuer- und Regeleinheit mit einer Messeinrichtung zur Erfassung eines oder mehrerer Ungleichförmigkeitsparameter in der Gelenkwellenanordnung (5) oder sich daran anschließender Antriebsstrangkomponenten (12, 21) vorgesehen ist, wobei das Stellglied (9) in Abhängigkeit einer oder mehrerer Ungleichförmigkeitsparameter durch die Steuer- und Regeleinheit ansteuerbar ist.

## Claims

1. A PTO-driven agricultural implement (1), preferentially PTO-driven soil cultivation implement, having a connecting device (2), preferentially a drawbar, for pivotably connecting the implement (1) to a drive unit (3), such as for example, a tractor, wherein the implement (1) is supplied with rotational energy via a PTO shaft (4) of the drive unit (3), wherein the transmission of the rotational energy between implement (1) and PTO shaft (4) takes place via a cardan shaft arrangement (5), which is assigned to the connecting device (2), wherein the cardan shaft arrangement (5) consists of at least one first (6) and a second cardan shaft (7), wherein between the first (6) and the second cardan shaft (7) a bearing unit (8) is arranged, which is moveably arranged on or at the connecting device (2), wherein the bearing unit comprises an intermediate shaft and is moveably arranged on or at the connecting device in such a manner that the intermediate shaft, in an angled position of the tractor relative to the implement, brings the first cardan shaft into a W-bend position and the second cardan shaft into a Z-bend position.

2. The agricultural implement according to Claim 1, **characterised in that** the bearing unit (8), seen from the implement (1) in the direction of the drive unit (3), with increasing pivoting (α) of the implement (1) or of the connecting device (2) relative to the drive unit (3), is moveably arranged laterally relative to the connecting device (2).

3. The agricultural implement according to Claim 1 or 2, **characterised in that** a movement of the bearing unit (8) takes place largely parallel to the orientation of the connecting device (2) between implement (1) and drive unit (3).

4. The agricultural implement according to any one of the preceding claims, **characterised in that** a movement of the bearing unit (8) relative to the connecting device (2) takes place opposite to the pivot direction of the implement (1) relative to the drive unit (3).

5. The agricultural implement according to any one of the preceding claims, **characterised in that** a control element (9) is provided, which is in connection with the bearing unit (8) and controls a movement of the bearing unit (8) relative to the connecting device (2) .

6. The agricultural implement according to Claim 5, **characterised in that** the control element (9) controls a movement of the bearing unit (8) relative to the connecting device (2) depending on the pivot angle (α) between implement and drive unit (3).

7. The agricultural implement according to Claim 5 or 6, **characterised in that** the control element (9) furthermore is in connection with a steering device, which actuates one or more steered axles of a chassis of the agricultural implement (1).

8. The agricultural implement according to any one of the Claims 5 to 7, **characterised in that** the control element (9) furthermore comprises an additional connection (11) to the drive unit (3) and/or to the agricultural implement (1).

9. The agricultural implement according to any one of the Claims 5 to 8, **characterised in that** the control element (9) is designed as a servomotor and **in that** a control and regulating unit with a measuring device for detecting geometrical position parameters of the connecting device and/or of the cardan shaft arrangement (5) or its drive train components (4, 6, 7, 8, 10, 12, 16, 21) arranged thereon is provided, wherein the control element (9) can be controlled by the control and regulating unit depending on one or more of the detected position parameters.

10. The agricultural implement according to any one of the Claims 5 to 9, **characterised in that** the control element (9) is designed as a servomotor and **in that** a control and regulating unit with a measuring device for detecting one or more irregularity parameters in the cardan shaft arrangement (5) or adjoining drive train components (12, 21) is provided, wherein the control element (9) can be controlled by the control and regulating unit depending on one or more irregularity parameters.

## Revendications

1. Engin agricole (1) fonctionnant par prise de force, de préférence engin de travail du sol fonctionnant par prise de force, pourvu d'un système de liaison (2), de préférence d'un timon, destiné à assurer une liaison pivotante de l'engin (1) avec une unité d'entraînement (3) par exemple un tracteur ; l'engin (1) étant alimenté en énergie de rotation par l'intermédiaire d'une prise de force (4) de l'unité d'entraînement (3), la transmission de l'énergie rotative entre l'engin (1) et la prise de force (4) ayant lieu par l'intermédiaire d'un ensemble d'arbres à cardan (5), lequel est associé au système de liaison (2), l'ensemble d'arbres à cardan (5) étant constitué d'au moins un premier (6) et un deuxième arbre à cardan (7), entre le premier (6) et le deuxième arbre à cardan (7) étant placée une unité de palier (8), laquelle est placée de manière déplaçable au-dessus ou sur le système de liaison (2), l'unité de palier comportant un arbre intermédiaire et étant placée de manière déplaçable au-dessus ou sur le système de liaison, de telle sorte que lorsque le tracteur se trouve en position coudée par rapport à l'engin, l'arbre intermédiaire amène le premier arbre à cardan dans une position recourbée en W et le deuxième arbre à cardan dans une position recourbée en Z.

2. Engin agricole selon la revendication 1, **caractérisé en ce que**, considérée à partir de l'engin (1) en direction de l'unité d'entraînement (3), avec un pivotement (α) croissant de l'engin (1) ou du système de liaison (2) vers l'unité d'entraînement (3), l'unité de palier (8) est placée de manière déplaçable, latéralement du système de liaison (2).

3. Engin agricole selon la revendication 1 ou 2, **caractérisé en ce qu'**un déplacement de l'unité de palier (8) a lieu largement à la parallèle de l'orientation du système de liaison (2) entre l'engin (1) et l'unité d'entraînement (3).

4. Engin agricole selon l'une quelconque des revendications précédentes, **caractérisé en ce qu'**un déplacement de l'unité de palier (8) par rapport au système de liaison (2) a lieu à l'opposée de la direction de pivotement de l'engin (1) vers l'unité d'entraînement (3).

5. Engin agricole selon l'une quelconque des revendications précédentes, **caractérisé en ce qu'**il est prévu un actionneur (9), lequel est en liaison avec l'unité de palier (8) et commande un déplacement de l'unité de palier (8) par rapport au système de liaison (2).

6. Engin agricole selon la revendication 5, **caractérisé en ce que** l'actionneur (9) commande un déplacement de l'unité de palier (8) par rapport au système de liaison (2), en fonction de l'angle de pivotement (α) entre l'engin et l'unité d'entraînement (3).

7. Engin agricole selon la revendication 5 ou 6, **caractérisé en ce que** l'actionneur (9) est en liaison par ailleurs avec un dispositif de direction, lequel manœuvre un ou plusieurs axes dirigeables d'un châssis de l'engin agricole (1).

8. Engin agricole selon l'une quelconque des revendications 5 à 7, **caractérisé en ce que** l'actionneur (9) comporte par ailleurs une liaison (11) supplémentaire vers l'unité d'entraînement (3) et / ou vers l'engin agricole (1).

9. Engin agricole selon l'une quelconque des revendications 5 à 8, **caractérisé en ce que** l'actionneur (9) est conçu sous la forme d'un servomoteur et **en ce qu'**il est prévu une unité de commande et de réglage, pourvue d'un système de mesure pour la détection de paramètres de position géométrique du système de liaison et / ou de l'ensemble d'arbres à cardan (5) placé sur celui-ci ou des composants (4, 6, 7, 8, 10, 12, 16, 21) de leur chaîne cinématique, l'actionneur (9) étant susceptible d'être activé par l'unité de commande et de réglage en fonction d'un ou de plusieurs des paramètres de position détectés.

10. Engin agricole selon l'une quelconque des revendications 5 à 9, **caractérisé en ce que** l'actionneur (9) est conçu sous la forme d'un servomoteur et **en ce qu'**il est prévu une unité de commande et de réglage, pourvue d'un système de mesure pour la détection d'un ou de plusieurs paramètres d'irrégularité de l'ensemble d'arbres à cardan (5) ou des composants (12, 21) de la chaîne cinématique qui se raccordent sur celui-ci, l'actionneur (9) étant susceptible d'être activé par l'unité de commande et de réglage en fonction d'un ou de plusieurs paramètres d'irrégularité.
